# EUROPEAN PATENT APPLICATION

(11) **EP 4 818 695 A1**
(43) Date of publication of application: **07.10.2026**
(21) Application number: 26165952.8
(22) Date of filing: 19.03.2026
(51) Int. Cl.: G01N 30/54, G01N 30/02

(54) **QUICK-COOL COILED CHROMATOGRAPHIC COLUMN MODULE**

(30) Priority: 04.04.2025 US 202563783565 P
(71) Applicant: MOCON, Inc., Minneapolis, MN 55428 (US)
(72) Inventor: KAHN, Benjamin Lee, Blaine, MN 55449 (US); OLMANSON, Emma Cecelia, St. Paul, MN 55108 (US)
(74) Representative: Vossius & Partner Patentanwälte Rechtsanwälte mbB

(57) **Abstract**

A quick-cool coiled chromatographic column module and a gas chromatograph that incorporates one or more of the quick-cool coiled chromatographic column modules. The module includes a chassis, a cooling radial fan, a coiled chromatographic column, and a temperature sensor. The coiled chromatographic column is captured by the chassis so as to radially encircle the cooling radial fan at a radially spaced distance from the rotatable fan blades. Operation of the fan is controlled by the temperature of the coiled chromatographic column sensed by the temperature sensor.

## Description

### BACKGROUND

Rapid accurate gas chromatograph mud logging is a long-sought goal of the drilling industry. Current gas chromatographs capable of detecting and quantifying "light" organics (i.e., C₁₋₅) require several minutes per cycle, which is not well suited for use in mud logging as the drill head can move a significant distance before the results of each test are available and appropriate drilling adjustments can be made.

### SUMMARY OF THE INVENTION

We have discovered that a parameter primarily responsible for the extended cycle time between runs on a gas chromatograph used to detect and quantify light organics is the duration of the cooldown period between runs. Hence, we have developed a small module capable of quickly cooling a coiled chromatographic column whereby the duration of the cooldown period is greatly reduced and the cycle time for each run of the gas chromatograph is reduced.

A first aspect of the invention is a quick-cool coiled chromatographic column module that includes a chassis, a cooling radial fan, a coiled chromatographic column, and a temperature sensor. The cooling radial fan has rotatable fan blades that rotate about an axial axis secured to the chassis. The coiled chromatographic column is captured by the chassis so as to radially encircle the cooling radial fan at a radially spaced distance from the rotatable fan blades. The temperature sensor is configured and arranged to sense the temperature of the coiled chromatographic column and operable for transmitting a signal indicating the sensed temperature of the coiled chromatographic column to an on-off controller.

A second aspect of the invention is a gas chromatograph that incorporates one or more of the quick-cool coiled chromatographic column modules of the first aspect of the invention.

### BRIEF DESCRIPTION OF THE DRAWINGS

Figure 1 is an exploded schematic view of one embodiment of the invention.
Figure 2 is a rear perspective view of a fully assembled embodiment of the invention with a schematic depiction of the coiled chromatographic column.
Figure 3 is a front view of the fully assembled embodiment of the invention depicted in Figure 2.
Figure 4 is an open-side side view of the fully assembled embodiment of the invention depicted in Figure 2, with a schematic depiction of the coiled chromatographic column.
Figure 5 is a schematic depiction of a gas chromatograph equipped with a pair of the quick-cool coiled chromatographic column modules depicted in Figure 2.

### DETAILED DESCRIPTION OF A PREFERRED EMBODIMENT

### Definitions

As utilized herein, including the claims, the phrase ***"thermally insulating"*** means a k value of less than 3 W/mK, and the phrase ***"highly thermally insulating"*** means a k value of less than 1 W/mK, and the phrase ***"superior thermally insulating"*** means a k value of less than 0.5 W/mK.

### Nomenclature Table

| **REF. No.** | **DESCRIPTION** |
|---|---|
| **10** | Gas Chromatograph |
| **100** | Quick-Cool Coiled Chromatographic Column Module |
| **120** | Chassis |
| **120ₘ** | Compartment Defining Unit of Chassis |
| **120ₙ** | Faceplate Unit of Chassis |
| **121** | First Side of Assembled Chassis |
| **122** | Second Side of Assembled Chassis |
| **123** | Third Side of Assembled Chassis |
| **124** | Fourth Side of Assembled Chassis (Open Side) |
| **125** | First Face of Assembled Chassis |
| **126** | Second Face of Assembled Chassis |
| **127** | Standoff |
| **129** | Compartment Defined by the Chassis |
| **129ₘ** | Air Flow Inlet Opening Through Compartment Defining Unit of Chassis |
| **129ₙ** | Air Flow Inlet Opening Through Faceplate Unit of Chassis |
| **130** | Thermally Insulating Spools |
| **140** | Cooling radial fan |
| **142** | Fan Blades |
| **140a** | Axial Direction of Cooling radial fan |
| **140ᵣ** | Radial Direction of Cooling radial fan |
| **157** | Electrical Leads for Powering the Cooling radial fan |
| **160** | Coiled Chromatographic Column |
| **180** | Temperature Sensor |
| **187** | Electrical Communication Lead Between Temperature Sensor and Controller |
| **190** | Heating Line |
| **197** | Electrical Leads for Powering the Heating Line |
| **200** | Controller |

### Construction

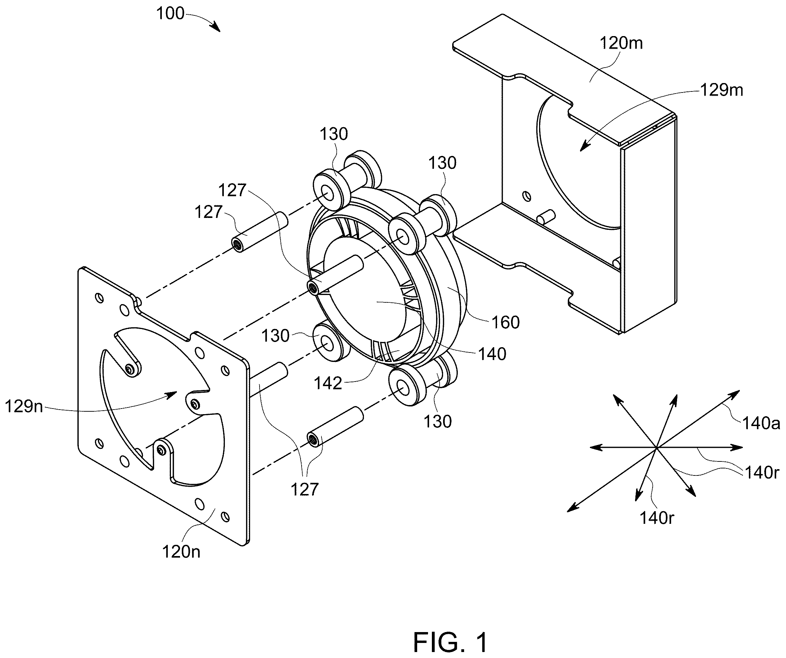

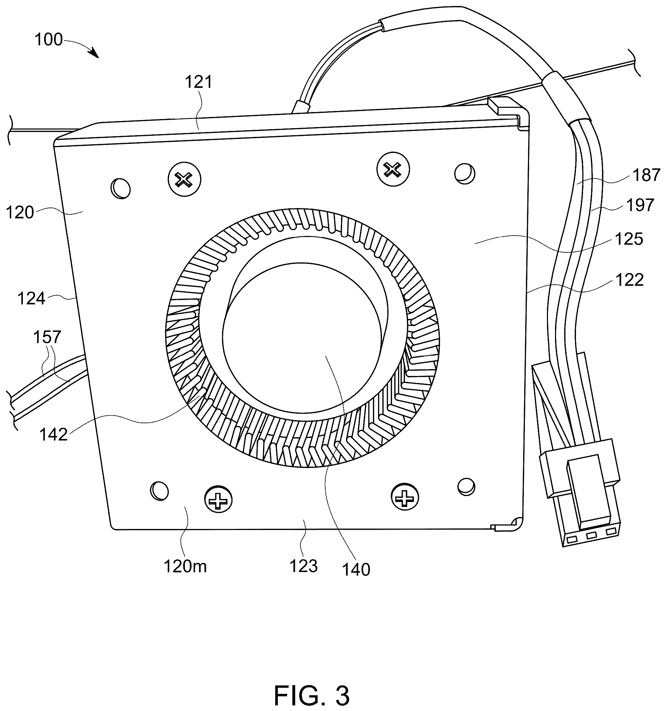

Referring generally to Figures 1-4, the invention is directed to a quick-cool coiled chromatographic column module **100,** and a gas chromatograph **10** that incorporates one or more of the quick-cool coiled chromatographic modules **100.** The quick-cool coiled chromatographic column module **100** includes a chassis **120,** a cooling radial fan **140,** a coiled chromatographic column **160,** and a temperature sensor **180.**

Referring generally to Figures 1-4, one embodiment of a suitable chassis **120** includes a compartment defining unit **120m,** a faceplate unit **120n** fastened to the compartment defining unit **120m** defining a compartment **129,** and a plurality of radially spaced standoffs **127** positioned between the compartment defining unit **120m** and the faceplate unit **120n.**

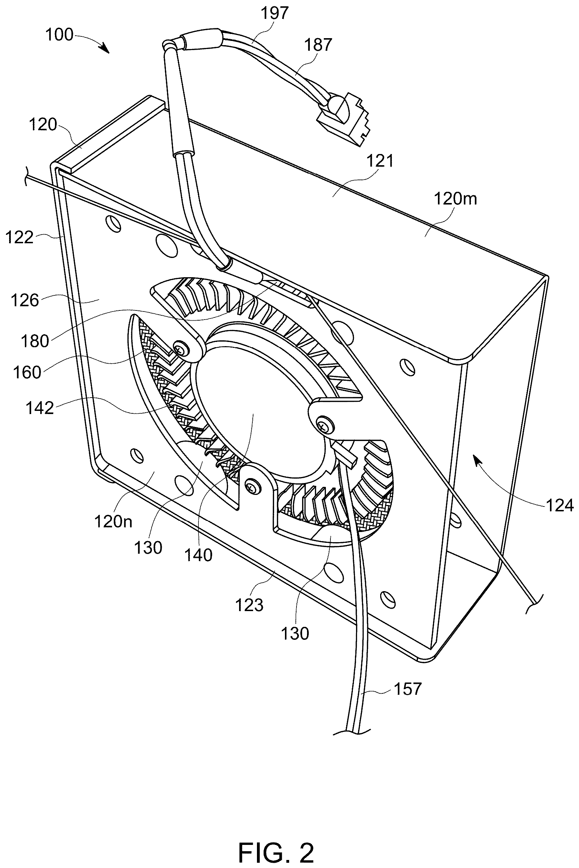

Referring generally to Figures 2-4, when assembled, the chassis **120** can include a first side **121,** a second side **122,** a third side **123,** and a fourth side **124,** a first face **125** and a second face **126,** with one or more of the sides open or partially open. The assembled chassis **120** defines a compartment **129** having a longitudinal height between the first and third sides **121** and **123,** a lateral width between the second and fourth sides **122** and **124,** and a transverse thickness between first and second faces **125** and **126.**

Referring generally to Figures 1-4, the cooling radial fan **140** is positioned within the compartment **129** and secured to the chassis **120,** with the axial axis of rotation **140a** of the cooling radial fan **140** extending in the transverse direction. An electrical lead **157** extends from the cooling radial fan **140** through the chassis **120** for powered connection to a source of electricity (not shown). Fan blades **142** on the cooling radial fan **140** rotate about the axial axis of rotation **140a** so as to direct a cooling air flow radially outward **140r** from proximate the axial axis of rotation **140a** towards the sides **121, 122, 123** and **124** of the chassis **120.**

Referring generally to Figures 1-3, the first and second faces **125** and **126** of the chassis **120** can each include an air flow inlet opening **129m** and **129n** respectively, for facilitating axial **140a** air intake into the compartment **129.**

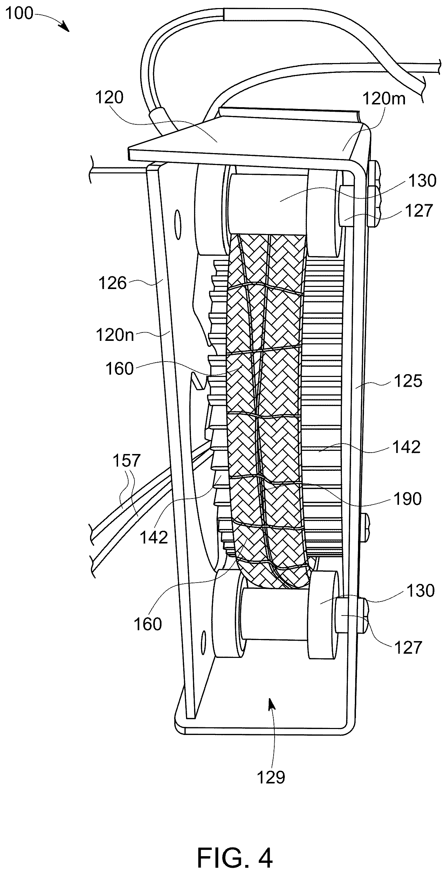

Referring generally to Figure 4, the coiled chromatographic column **160** is captured by the chassis **120** so as to radially encircle the cooling radial fan **140** at a radially **140r** spaced distance from the rotatable fan blades **142** whereby air flow generated by the cooling radial fan **140** can flow unabated into contact with substantially the entire 360° of the coiled chromatographic column **160.**

The coiled chromatographic column **160** can be wound in substantially any fashion, with a preference for a uniform single helical layer or a basketweave single helical layer, both of which provide superior exposed surface area for contact by air flow emanating from the cooling radial fan **140.**

A preferred radial spacing of the coiled chromatographic column **160** and the rotatable fan blades **142** is between 2 mm and 20 mm, and more preferably between 3 mm and 10 mm. A spacing of less than about 2 mm risks damaging contact between the coiled chromatographic column **160** and the rotatable fan blades **142** over time, while a spacing of greater than about 20 mm unnecessarily decreases the cooling effect of the air flow generated by the rotating fan blades **142.**

Typical chromatographic columns **160,** when coiled, will exert a radially **140r** outward bias towards an uncoiled state and may thereby be conveniently captured by circumferentially spaced axially extending members (i.e., positioning the coiled chromatographic column **160** radially inside the standoffs **127** which serve as stops for preventing any further outward uncoiling of the coiled chromatographic column **160).** In a preferred embodiment, the standoffs **127** themselves may be constructed of a thermally insulating material (i.e., a thermally insulating, highly thermal insulating or superior thermal insulating plastic) or a separate thermally insulating spools **130** made from a thermally insulating, highly thermal insulating or superior thermal insulating material such as plastic, may be mounted onto each standoff **127,** for preventing thermal transfer and thermal damage to the standoffs **127** and other components of the module **100.**

The coiled chromatographic column **160** can be substantially any type of chromatographic column including specifically but not exclusively a boiling point chromatographic column.

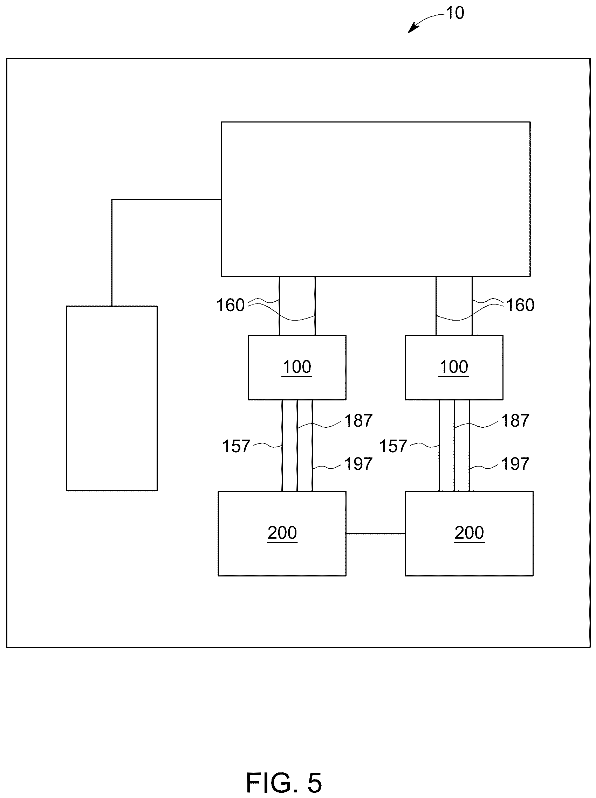

Referring generally to Figures 2 and 5, the temperature sensor **180** can be positioned within the compartment **129** for sensing the temperature of the coiled chromatographic column **160** and transmitting a signal along electrical communication lead **187** to a controller **200** onboard a gas chromatograph **10** indicating the sensed temperature of the coiled chromatographic column **160** for on-off control of the cooling radial fan **140.** More specifically, the controller **200,** based upon the sensed temperature signals received from the temperature sensor **180,** preferably activates the cooling radial fan **140** when the sensed temperature exceeds a first threshold temperature and deactivates the cooling radial fan **140** when the sensed temperature drops below a second threshold temperature. The ΔT between the first threshold temperature and the second threshold temperature is preferably at least 50°C, and most preferably at least 100°C.

Referring generally to Figure 4, a heating line **190** may be wrapped around the coiled chromatographic column **160** for heating a sample under test flowing through the coiled chromatographic column **160.** An electrical lead **197** extends from the heating line **190** through the chassis **120** for powered connection to a source of electricity (not shown). The heating line **190** may also be in communication with the controller **200** via electrical communication lead **187** for on-off control.

## Claims

1. A quick-cool coiled chromatographic column module, comprising:
(a) a chassis,
(b) a cooling radial fan having rotatable fan blades that rotate about an axial axis secured to the chassis,
(c) a coiled chromatographic column captured by the chassis so as to radially encircle the cooling radial fan at a radially spaced distance from the rotatable fan blades, and
(d) a temperature sensor for sensing the temperature of the coiled chromatographic column and transmitting a signal indicating the sensed temperature of the coiled chromatographic column to an on-off controller.

2. The quick-cool coiled chromatographic column module of claim 1, further comprising:
(e) a controller in communication with the temperature sensor for activating the cooling radial fan when the sensed temperature exceeds a first threshold temperature and deactivating the cooling radial fan when the sensed temperature drops below a second threshold temperature.

3. The quick-cool coiled chromatographic column module of claim 1 or 2, further comprising a heating line wrapped with the coiled chromatographic column for heating a sample flowing through the coiled chromatographic column.

4. The quick-cool coiled chromatographic column module of any of the previous claims, wherein air flow generated by the cooling radial fan flows unabated into contact with the entire 360° of the coiled chromatographic column.

5. The quick-cool coiled chromatographic column module of any of the previous claims, wherein the coiled chromatographic column is a coiled boiling point chromatographic column.

6. The quick-cool coiled chromatographic column module of any of the previous claims,
wherein the radially spaced distance between the coiled chromatographic column and the rotatable fan blades is between 2 mm and 20 mm
, wherein the radially spaced distance between the coiled chromatographic column and the rotatable fan blades is preferably between 3 mm and 10 mm.

7. The quick-cool coiled chromatographic column module of claim 2, wherein the ΔT between the first threshold temperature and the second threshold temperature is at least 50°C.

8. The quick-cool coiled chromatographic column module of claim 2, wherein the ΔT between the first threshold temperature and the second threshold temperature is at least 100°C.

9. The quick-cool coiled chromatographic column module of any of the previous claims,
wherein the coiled chromatographic column is wound uniformly as a single helical layer
, wherein the coiled chromatographic column is preferably a basketweave single helical layer.

10. The quick-cool coiled chromatographic column module of any of the previous claims,
wherein the captured coiled chromatographic column is captured by circumferentially spaced thermally insulating axially extending members
, wherein the circumferentially spaced thermally insulating axially extending members preferably are plastic cylindrical spools.

11. The quick-cool coiled chromatographic column module of any of the previous claims, wherein the captured coiled chromatographic column is captured by circumferentially spaced highly thermally insulating axially extending members.

12. The quick-cool coiled chromatographic column module of claim 11, wherein the circumferentially spaced thermally insulating axially extending members are plastic cylindrical spools.

13. The quick-cool coiled chromatographic column module of any of the previous claims, wherein the captured coiled chromatographic column is captured by circumferentially spaced superior thermally insulating axially extending members.

14. The quick-cool coiled chromatographic column module of any of the previous claims, wherein the circumferentially spaced thermally insulating axially extending members are plastic cylindrical spools.

15. A gas chromatograph including the quick-cool coiled chromatographic column module of any of the previous claims.
